# EUROPEAN PATENT APPLICATION

(11) **EP 2 482 492 A1**
(43) Date of publication of application: **01.08.2012**
(21) Application number: 11151943.5
(22) Date of filing: 25.01.2011
(51) Int. Cl.: H04L 12/26, H04L 12/56

(54) **Measuring service quality**

(71) Applicant: TeliaSonera AB, 106 63 Stockholm (SE)
(72) Inventor: Välimaa, Harri, 36200, Kangasala (FI); Niemi, Eetu, 33200, Tampere (FI)
(74) Representative: Papula Oy

(57) **Abstract**

A probe (PR) and a UDP responder (RESA, RESB, RESC) for measuring service quality in a data network. The UDP test packet comprises at least one header field in the packet payload for addressing the UDP packet. The probe (PR) sends the UDP packet to the first UDP responder (RESA). The first UDP responder (RESA) modifies the UDP packet header field and forwards the UDP packet to a second UDP responder (RESB) or returns the UPD packet to the probe (PR) based on the unmodified header field information.

## Description

The invention relates to measuring service quality in a data network.

### BACKGROUND OF THE INVENTION

The reasons for measuring service quality in a data network are for example verifying the Service Level Agreement (SLA) between the network operator and the customer. Network operators need network measurements for capacity management or fault isolation purposes. Service quality may be measured for example from the IP transmission (IP, Internet Protocol) or from the UDP transmission (UDP, User Datagram Protocol). UDP is defined to make available a datagram mode of packet-switched computer communication in the environment of an interconnected set of computer networks. This protocol assumes that the IP is used as the underlying protocol; therefore, UDP is often referred to as UDP/IP. UDP measurement is particularly suitable for measuring realtime applications that rely on quick data flow such as streaming media or Voice over IP, VoIP.

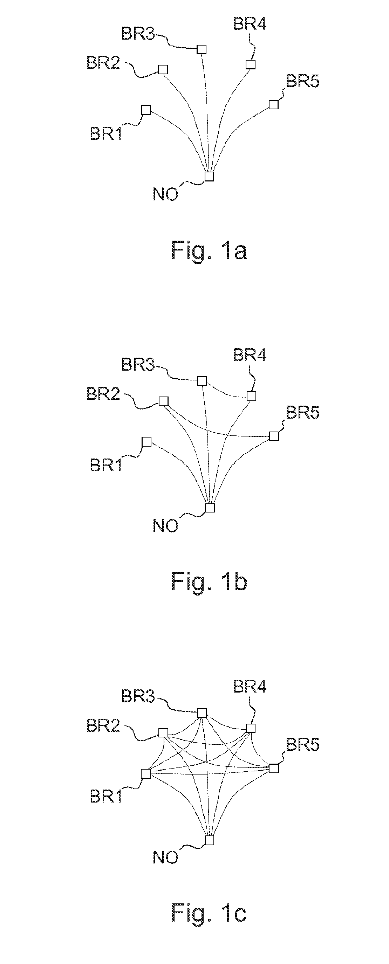

Traditional UDP echo measurement is a point-to-point test where a probe sends UDP packet test feed to UDP responder device which returns packets back to the originator probe. This method is suitable for hub-and-spoke type network topology, i.e. traffic flows between a main site and branch sites, but not between branch sites (Fig 1a). In hub-and-spoke network topology, measurements can be implemented by deploying a probe to the main site and one responder device to each branch site.

If the topology of the measured network is partially (Fig. 1b) or fully meshed (Fig. 1c), the aforementioned method does not work since vertical branch-to-branch connections are not being measured. The measurement of vertical connections would require additional probe devices to be placed at branch sites, increasing measurement costs significantly.

One example of network measurement is presented in EP2187565A1 (Huawei), which discloses fault detection of the peers on the forwarding path in a P2P network.

### PURPOSE OF THE INVENTION

The purpose of the invention is to present an economical way for service quality measurements in data networks (e.g. WAN and LAN). The service quality measurement according to the present invention is effective in a meshed network topology, especially between different branches. For example, the service level between branches can be measured. This provides valuable information for the network operator about the functionality of the connections inside the network, for example inside a corporate network, and services utilized inside this network. One common example of such service is VoIP - for a corporate customer it is very important that the service level between two different branches is measured as realistically as possible. The measurements can be either continuous or temporary, according to the service.

### SUMMARY

Various aspects of examples of the invention are set out in the claims. According to a first aspect of the present invention, the invention discloses a method for measuring service quality in a data network comprising a probe and at least one UDP responder. The method comprises the steps of generating a UDP packet comprising at least one header field in the packet payload for addressing the UDP packet, sending the UDP packet from the probe to the first UDP responder, modifying said UDP packet header field by the first UDP responder and forwarding the UDP packet to a second UDP responder or returning the UPD packet to the probe based on the unmodified header field information.

According to a second aspect of the present invention, the invention discloses a system for measuring service quality in a data network comprising a probe and at least one UDP responder, wherein the probe comprises means for generating a UDP packet comprising at least one header field in the packet payload for addressing the UDP packet and means for sending the UDP packet to the first UDP responder. The first UDP responder comprises means for modifying said UDP packet header field and means for forwarding the UDP packet to a second UDP responder or returning the UPD packet to the probe based on the unmodified header field information.

According to a third aspect of the present invention, the invention discloses a probe for measuring service quality in a data network comprising a probe and at least one UDP responder. The probe comprises at least one processor and at least one memory including computer program code. The at least one memory and the computer program code are configured, with the at least one processor, to cause the probe to perform at least the following: sending a UDP packet to the UDP responder, generating a UDP packet comprising at least one header field in the packet payload for addressing the UDP packet; and sending the UDP packet to the first UDP responder.

According to a fourth aspect of the present invention, the invention discloses a UDP responder for measuring service quality in a data network comprising a probe and at least one UDP responder. The UDP responder comprises at least one processor and at least one memory including computer program code. The at least one memory and the computer program code are configured , with the at least one processor, to cause the probe to perform at least the following: receiving a UDP packet from the probe or from another UDP responder, modifying the UDP packet header field for addressing the UDP packet, wherein the header field is located in the packet payload; and forwarding the UDP packet to a second UDP responder or returning the UPD packet to the probe based on the unmodified header field information.

The benefits of the invention are that mesh type network topology can be measured with inexpensive responder devices as opposed to router devices. The functionality according to the invention is easy to implement in the existing infrastructure. Another benefit of the invention offers the network operator an effective tool to monitor service level, detect faults in the network and manage network capacity. The benefit of UDP measurement is that it enables simultaneous tests to different locations, thereby offering more tools for network management.

### BRIEF DESCRIPTION OF THE DRAWINGS

The accompanying drawings, which are included to provide a further understanding of the invention and constitute part of this specification, illustrate embodiments of the invention and together with the description help to explain the principles of the invention. In the drawings:
**Fig. 1a** is a block diagram of an example of a branch-and-spoke type network topology,
**Fig. 1b** is a block diagram of an example of a partially meshed hub-and-spoke network topology, and
**Fig. 1c** is a block diagram of an example of a fully meshed network topology,
**Fig. 2** is a block diagram of an example embodiment of the present invention,
**Fig. 3** is a block diagram of a UDP test packet,
**Fig. 4** is a state diagram of UDP test packet transitions between the entities, and
**Fig. 5** is a table illustrating the logic of test packet handling.

### DETAILED DESCRIPTION OF THE INVENTION

Reference will now be made in detail to the embodiments of the present invention, examples of which are illustrated in the accompanying drawings.

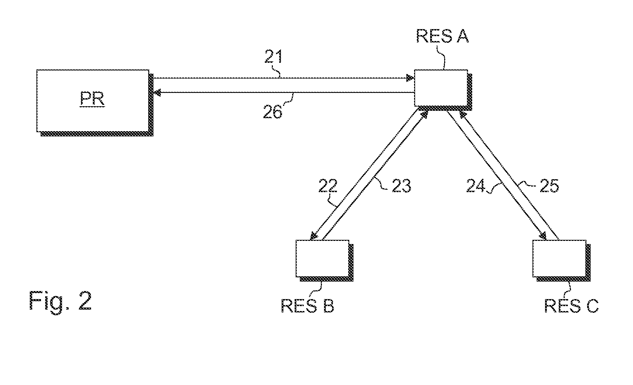

In Figure 2 a block diagram is used to illustrate one simplified usage scenario of the invention. A probe PR generates a UDP test packet feed and sends the test packet feed, arrow 21, to a first responder RES B. The first responder RES B comprises an analyzer that decides whether the test packet feed is sent forward to a second responder RES C, arrow 22, or returned to the sender probe PR, arrow 26.

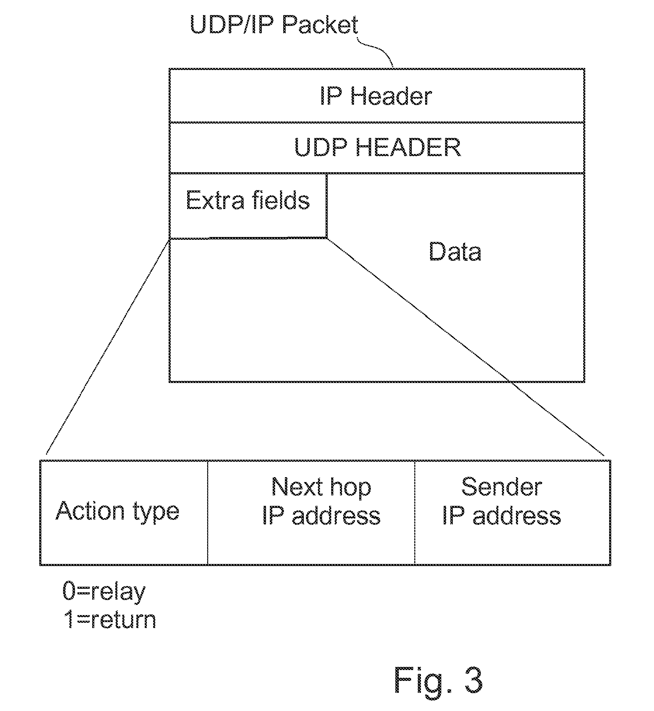

The UDP test packet according to the present invention comprises header fields that are carried in the packet payload. These extra fields are used for instructions about the packet handling by the UDP responder according to the present invention. The fields are illustrated in Figure 3. The extra field definitions comprise:
Action type - defines the action that the UDP responder according to the present invention should perform after receiving the test packet. If the value is 0, the responder will forward the IP packet to the IP address defined in "Next hop IP address" field. If the value is 1, the responder will return the packet to the packet source.

Next hop IP address - defines the IP address to which the packet will be forwarded by the UDP responder according to the present invention if the action type in the packet is 0.

Sender IP address - stores the IP address of packet sender.

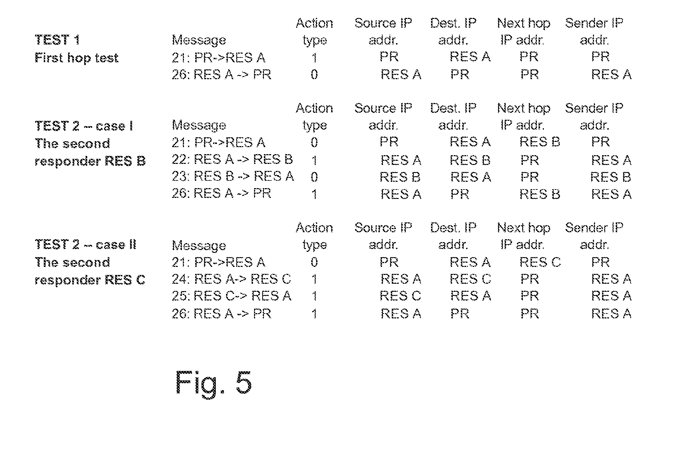

If the action type in the UDP test packet is 0, the first UDP responder RES A changes the action type value to 1 and forwards the test packet to the second UDP responder. The second UDP responder can be another UDP responder comprising the functionalities of the present invention (case I) or a UDP responder according to the prior art (case II). The second UDP responder returns the packet back to the probe PR via the first UDP responder RES A that was used as an intermediator. Before the second UDP responder returns the packet, it changes the action type value to 0 (=forward packet to next hop IP) and thus gives instructions for the first UDP responder RES A to handle the returning packets. Because the UDP responder according to the prior art RES C cannot write or read extra fields carried in the UDP payload, the second UDP responder RES C cannot change the action type. Therefore, the first UDP responder RES A checks the Action type field and the Sender IP address field. If the Sender IP address in UDP test packets is the same as Destination IP address, the first UDP responder RES A is aware that packets are returning from the traditional UDP responder RES C. In this case the first UDP responder RES A overrides the Action type field value 1 (=return to source IP address) and forwards packets to the probe PR (=next hop IP). The logic of test packet handling is illustrated in Figure 5.

One exemplary embodiment of the invention refers to Figure 1b. The probe PR resides at site NO. Intelligent UDP responders reside at branch sites BR2, BR3 and BR4. UDP responders according to prior art are able to measure connections between sites NO-BR1, but not the connection between sites BR1-BR5. By using an intelligent responder according to the present invention it is possible to measure also connections NO-BR5 via BR2. After connections are measured, the results for the connection BR2-BR5 can be derived from the gathered data. The probe PR according to the invention is capable of using UDP header extra fields that are carried within the packet payload. To improve measurement accuracy, the probe PR may be able to inject test packet feeds to different destinations simultaneously. For example, in the previous example, measurements NO-BR2 and NO-BR5 via BR2 should be performed at the same time. The probe is either capable of handling several test feeds at the same time or capable of injecting overlapping test packet feeds (e.g. every other test packet is NO-BR2 and every other NO-BR5 via BR2).

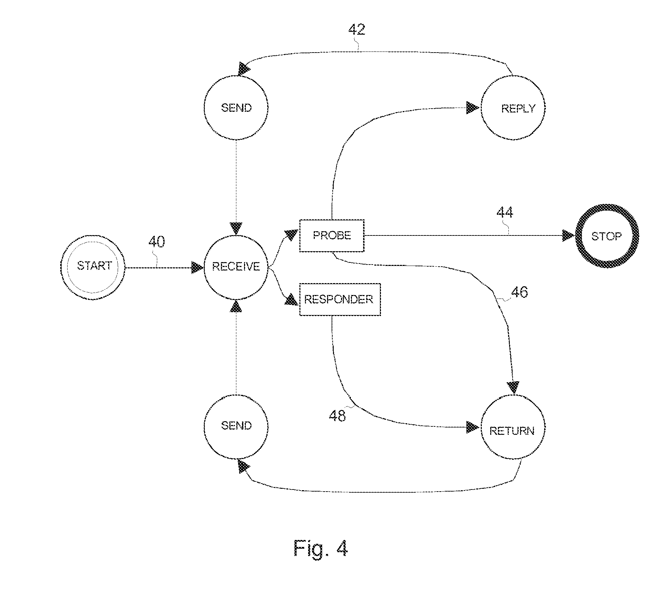

Figure 4 is a simplified state diagram illustrating different state transitions of the test UDP packet between different entities, the probe and the responder, wherein each arrow represents a state transition. The process starts when either the responder RESA, RESB or RESC receives the UDP packet from the probe, arrow 40. If the action type for the probe PR is set to relay, then tmp_source is set to source, the source is set to probe, the destination is set to nexthop, the sender is set to probe, the nexthop is set to tmp_source and the action type is set to return; arrow 42. If the response has already returned to the probe PR, the action type is set to return, the sender is not probe and the nexthop is set to probe, then the process ends; arrow 44.

According to arrow 46, if the action type is set to return and the sender is set to probe, then the source is set to probe, the destination is set to nexthop and the sender is probe. Else, if the action type is set to return and the sender is not probe and the nexthop is not probe, the source is set to destination, the destination is set to nexthop and the sender is set to probe.

According to arrow 48 the responder function always returns the UDP packet to sender. The source is set to destination and the destination is set to source.

The probe PR may be carried out as a software implementation in a larger network management system that is located either at the network operator's premises or for example at a large company's data center. The probe PR may also be a stand-alone product that is connected to the network management system. The UDP responder RESA, RESB or RESC may be a stand-alone product located at a large company's branch office, where it is connected to the data network. The UDP responder may be a stand-alone product comprising minimal features apart from the responding function, which makes it preferably inexpensive to manufacture and easy to implement in various parts of the network. Currently, the cost of a responder device is relatively much lower than the cost of a probe device. By using the present invention it is possible to replace several probes with simple responder devices and thus lower the overall cost for network management in a complex network topology.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for measuring service quality in a data network comprising a probe and at least one UDP responder, **characterized in that** the method comprises the steps of:
generating a UDP packet comprising at least one header field in the packet payload for addressing the UDP packet;
sending the UDP packet from the probe to the first UDP responder;
modifying said UDP packet payload header field by the first UDP responder; and
forwarding the UDP packet to a second UDP responder or returning the UPD packet to the probe based on the unmodified payload header field information.

2. The method according to claim 1, **characterized in that** the method comprises the steps of returning the UDP packet from the second UDP responder to the first UDP responder; and returning the UDP packet from the first UDP responder to the probe.

3. The method according to claim 1 or 2, **characterized in that** the payload comprises a header field defining the address to which said UDP packet will be forwarded.

4. The method according to claim 1 or 2, **characterized in that** the payload comprises a header field defining the address of the packet sender.

5. The method according to claim 1 or 2, **characterized in that** said payload header field comprises a field defining whether the responder forwards the packet to the next defined address or returns the packet to the packet source.

6. A system for measuring service quality in a data network comprising a probe and at least one UDP responder, **characterized in that** the system comprises:
a probe comprising means for generating a UDP packet comprising at least one header field in the packet payload for addressing the UDP packet; and
the probe comprising means for sending the UDP packet to the first UDP responder;
a first UDP responder comprising means for modifying said UDP packet payload header field; and
the first UDP responder comprising means for forwarding the UDP packet to a second UDP responder or returning the UPD packet to the probe based on the unmodified payload header field information.

7. The system according to claim 6, **characterized in that** the second UDP responder comprises means for returning the UDP packet to the first UDP responder.

8. The system according to claims 6 or 7, **characterized in that** the first UDP responder comprises means for returning the UDP packet from the first UDP responder to the probe.

9. A probe for measuring service quality in a data network comprising a probe and at least one UDP responder, said probe comprising;
at least one processor; and
at least one memory including computer program code;
the at least one memory and the computer program code being configured, with the at least one processor, to cause the probe to perform at least the following:
sending a UDP packet to the UDP responder, **characterized in that** the probe performs at least the following:
generating a UDP packet comprising at least one header field in the packet payload for addressing the UDP packet; and
sending the UDP packet to the first UDP responder.

10. A UDP responder for measuring service quality in a data network comprising a probe and at least one UDP responder, said UDP responder comprising;
at least one processor; and
at least one memory including computer program code;
the at least one memory and the computer program code being configured, with the at least one processor, to cause the probe to perform at least the following:
receiving a UDP packet from the probe or from another UDP responder, **characterized in that** the UDP responder performs at least the following:
modifying the UDP packet header field for addressing the UDP packet, wherein the header field is located in the packet payload; and
forwarding the UDP packet to a second UDP responder or returning the UPD packet to the probe based on the unmodified header field information.

11. A computer program for carrying out any one of the steps of claims 1 to 5.
